(19) Europäisches Patentamt
European Patent Office
Office européen des brevets

(11) EP 4 722 585 A1

(12) EUROPEAN PATENT APPLICATION
published in accordance with Art. 153(4) EPC

(43) Date of publication:
08.04.2026 Bulletin 2026/15

(51) International Patent Classification (IPC):
F21V 13/02 (2006.01)     F21V 8/00 (2006.01)
F21V 5/04 (2006.01)      F21W 111/00 (2006.01)
F21W 131/30 (2006.01)

(21) Application number: 24835335.1

(22) Date of filing: 02.07.2024

(52) Cooperative Patent Classification (CPC):
F21V 5/04; F21V 13/02; G02B 6/00; F21W 2111/00;
F21W 2131/30

(86) International application number:
PCT/CN2024/103111

(87) International publication number:
WO 2025/007854 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.07.2023 CN 202321745833 U

(71) Applicant: Wuhu Midea Smart Kitchen Appliance
Manufacturing Co., Ltd.
Wuhu, Anhui 241000 (CN)

(72) Inventors:
• LIU, Linfeng
Wuhu, Anhui 241000 (CN)
• ZHAO, Shuo
Wuhu, Anhui 241000 (CN)
• WEI, Zhongke
Wuhu, Anhui 241000 (CN)

(74) Representative: RGTH
Patentanwälte PartGmbB
Neuer Wall 10
20354 Hamburg (DE)

(54) INDICATOR LIGHT OF HOUSEHOLD APPLIANCE, AND HOUSEHOLD APPLIANCE

(57) An indicator light of a household appliance, and a household appliance, relating to the field of household appliances. The indicator light of a household appliance includes: a light source; a light guide member, wherein the light source faces a light incident surface of the light guide member, and the light guide member is used for reflecting light incident from the light incident surface and emitting light from a light exit surface; and a convex lens, wherein the light exit surface faces the convex lens.

100

FIG. 1

EP 4 722 585 A1

## Description

### CROSS-REFERENCE TO RELATED APPLICATION

This application is submitted based on and claims a priority to Chinese Patent Application No. 202321745833.1, filed on July 04, 2023, the entire disclosure of which is incorporated herein by reference.

### FIELD

The present disclosure relates to the field of household appliances, and particularly, to an indicator light of a household appliance, and a household appliance.

### BACKGROUND

At present, household appliances typically use indicator lights to inform users of their operating states. Conventional indicator lights generally involve mounting an LED indicator mainboard in a cavity close to an inner side of an outer wall of the products, and a light-transmitting hole is provided at a part of an outer wall that corresponds to an LED light. LED light beams are emitted through the light-transmitting hole. However, due to factors such as manufacturing processes, directly using the LED light may affect the light spot quality of the indicator light. As a result, the spot color temperature and illuminance are uneven, and color patches may be even formed, thereby significantly degrading the light spot quality.

### SUMMARY

The present disclosure aims to solve at least one of the technical problems in the related art. To this end, the present disclosure provides an indicator light of a household appliance, and a household appliance, which can make an overall light effect of the indicator light of the household appliance clear and uniform, and thus improve aesthetic appearance of the indicator light of the household appliance.

In a first aspect, the present disclosure provides an indicator light of a household appliance. The indicator light comprises a light source, a light guide member, and a convex lens. The light source faces a light incident surface of the light guide member. The light guide member is configured to reflect light incident from the light incident surface and emit the light through a light-emitting surface. The light-emitting surface faces the convex lens.

For the indicator light of the household appliance according to the present disclosure, the light emitted from the light source into the light guide member is subjected to multiple total internal reflections on an inner wall of the light guide member. The light is fully mixed and uniform, exits through the light-emitting surface of the light guide member, and is then imaged by the convex lens, resulting in a clear emitted light spot. As a result, the overall light effect of the indicator light of the household appliance can be made clear and uniform, thereby improving the aesthetic appearance of the indicator light of the household appliance.

According to an embodiment of the present disclosure, the light-emitting surface is parallel to and spaced apart from the convex lens.

According to an embodiment of the present disclosure, a cross-sectional area of the light guide member gradually increases from the light incident surface to the light-emitting surface.

According to an embodiment of the present disclosure, the light guide member is made of a material selected from Polymethyl Methacrylate (PMMA), Polycarbonate (PC), and Acrylonitrile Butadiene Styrene (ABS).

According to an embodiment of the present disclosure, the light-emitting surface is a frosted surface.

According to an embodiment of the present disclosure, the light source is an RGB (Red Green Blue) tricolor light source.

According to an embodiment of the present disclosure, the indicator light satisfies: $10mm \leq L1 \leq 80mm$; $50mm \leq L2 \leq 500mm$; and $10mm \leq D1 \leq 50mm$, where: $L1$ represents a distance between the convex lens and the light-emitting surface; $L2$ represents a distance between the convex lens and a panel; and $D1$ represents a radius of curvature of the convex lens.

According to an embodiment of the present disclosure, the indicator light satisfies: $2mm \leq D2 \leq 5mm$; $1mm \leq D3-D2 \leq 3mm$; and $15mm \leq L3 \leq 50mm$, where: $D2$ represents a diameter of the light incident surface; $D3$ represents a diameter of the light-emitting surface; and $L3$ represents a length of the light guide body.

According to an embodiment of the present disclosure, the indicator light satisfies: $0\ mm \leq L4 \leq 4\ mm$, where $L4$ represents a distance between the light source and the light incident surface.

In a second aspect, the present disclosure provides a household appliance. The household appliance comprises a panel and the indicator light according to any one of the above embodiments of the present disclosure. The convex lens faces the panel.

According to the household appliance of the present disclosure, by providing the above-mentioned indicator light, different colors of the indicator light can be displayed on the panel of the household appliance, which can inform a user of an operating state of the household appliance, thereby facilitating use and improving user experience. Furthermore, an indicator pattern can be formed on the panel, which not only facilitates use, but also improves the aesthetic appearance of the indicator panel of the household appliance.

Additional aspects and advantages of the embodiments of the present disclosure will be provided at least in part in the following description, or will become apparent in part from the following description, or can be learned from the practice of the embodiments of the present disclosure.

## BRIEF DESCRIPTION OF THE DRAWINGS

These and other aspects and advantages of embodiments of the present disclosure will become apparent and more readily appreciated from the following descriptions made with reference to the accompanying drawings.

FIG. 1 is a first schematic structural view of an indicator light of a household appliance according to an embodiment of the present disclosure.

FIG. 2 is a second schematic structural view of an indicator light of a household appliance according to an embodiment of the present disclosure.

Reference numerals:

indicator light 100;
light source 110;
light guide member 120, light incident surface 121, light-emitting surface 122;
convex lens 130;
panel 210.

## DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by the same or similar reference numerals. The embodiments described below with reference to the drawings are illustrative only, and are intended to explain rather than limit the present disclosure.

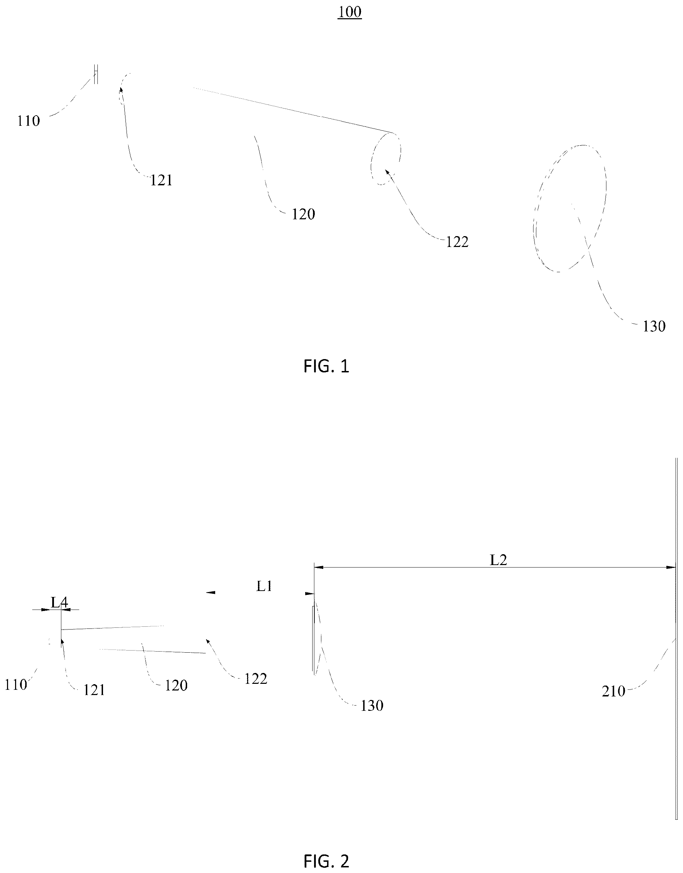

An indicator light of a household appliance according to an embodiment of the present disclosure is described below with reference to FIG. 1 and FIG. 2.

As shown in FIG. 1, an indicator light 100 of a household appliance comprises a light source 110, a light guide member 120, and a convex lens 130.

The light source 110 is configured to provide light required by the indicator light 100 of the home appliance, so that the indicator light 100 of the home appliance can inform a user of an operating state of the home appliance.

The light source 110 in the present disclosure may be an LED lamp, which is energy-efficient, environmentally friendly, diverse in variety, flexible in application, and have a long service life. The LED lamp can greatly improve operating efficiency of the light source 110 or reduce production cost of the light source 110. Of course, the light source 110 may also be a fluorescent lamp or a gas discharge lamp, etc. The present disclosure does not impose any specific limitation in this regard.

It should be noted that the LED lamp may be a monochromatic light source, a dual-color light source, a multi-color light source, or an RGB tricolor light source. When the light source 110 is a monochromatic LED lamp, the operating state of the household appliance can be indicated by controlling different states of the LED lamp, such as flashing or steady illumination. When the light source 110 is a dual-color LED lamp, the dual-color LED lamp can emit red light and green light. In specific implementation, a state of the LED lamp can be controlled by editing a corresponding program. When the household appliance operates normally, the LED light glows steadily in green. When a fault occurs, the LED light glows steadily in red. The present disclosure does not impose any specific limitation in this regard.

The light guide member 120 is configured to enable the light emitted by the light source 110 to be subjected to multiple reflections on an inner wall of the light guide member 120 and then to be emitted out. When the light source 110 is a multi-color light source, the incident light of various colors may be fully and evenly mixed by the light guide member 120. As a result, an overall light effect of the indicator light 100 of the household appliance can be clear and uniform, and aesthetic appearance of the indicator light 100 of the household appliance can be improved.

The light guide member 120 may be made of a material with high light transmittance, such as transparent plastic, optical glass, or optical resin. The present disclosure does not impose any specific limitation in this regard.

A reflective film may be coated on the inner wall of the light guide member 120 to form an optical reflective surface. As a result, all light incident on the inner wall of the light guide member 120 of a cylindrical shape can be reflected, ensuring that the incident light undergoes multiple total internal reflections on the inner wall of the light guide member 120. Therefore, the incident light is fully and evenly mixed. Of course, a light-shielding film may also be coated on an outer wall of the light guide member 120 to form an optical protective surface, which can effectively reduce loss of the incident light on the light guide member 120 and thus improve a utilization rate of the incident light. The present disclosure does not impose any specific limitation in this regard.

As shown in FIG. 2, two end surfaces of the light guide member 120 are an light incident surface 121 and a light-emitting surface 122, respectively. The light source 110 faces the light incident surface 121 of the light guide member 120, which can ensure that the incident light of the light source 110 enters through the light incident surface 121, travels through an interior of the light guide member 120, and is emitted to an exterior of the light guide member 120 through the light-emitting surface 122.

As shown in FIG. 2, the light guide member 120 has a certain length. The light incident surface 121 and the light-emitting surface 122 of the light guide member 120 may be of circular or polygonal shape. When the light incident surface 121 and the light-emitting surface 122 of the light guide member 120 are both of the circular shape, the light guide member 120 may be a columnar body. The light guide member 120 may be a solid columnar body or a hollow cylindrical columnar body. The present disclosure does not impose any specific limitation in this regard.

Of course, in other embodiments, the light incident surface 121 may be of a polygonal shape, and the light-emitting surface 122 may be of a circular shape; or the light incident surface 121 and the light-emitting surface 122 may both be of a polygonal shape. The present disclosure does not impose any specific limitation in this regard.

As shown in FIG. 1, the light guide member 120 and the convex lens 130 are sequentially arranged horizontally and spaced apart from each other in a light emitting direction of the light source 110. The light-emitting surface 122 of the light guide member 120 faces the convex lens 130. After the light is fully and evenly mixed through the light guide member 120, the light is emitted through the light-emitting surface 122 towards the convex lens 130. Through an imaging principle of the lens, after the light emitted from the light-emitting surface 122 is collected by the convex lens 130, an image can be formed by the convex lens 130 on a side of the convex lens 130 away from the light-emitting surface 122. Furthermore, the convex lens 130 has a converging effect, which can make the emitted light spot clear, thereby improving clarity of the overall light effect of the indicator light 100.

The convex lens 130 may be made of transparent plastic, such as PMMA, PC, ABSand so on. The convex lens 130 may also be made of transparent optical materials, such as glass, quartz, or organic glass. The present disclosure does not impose any specific limitation in this regard.

The convex lens 130 may be in the form of a double-convex lens, a plano-convex lens, a concave-convex lens (or a positive meniscus lens), etc. In the present disclosure, the convex lens 130 may be a plano-convex lens. Of course, in other embodiments, the convex lens 130 may also be a double-convex lens. The present disclosure does not impose any specific limitation in this regard.

According to the indicator light of the household appliance of the present disclosure, the light emitted from the light source 110 into the light guide member 120 is subjected to the multiple total internal reflections on the inner wall of the light guide member 120. The light is fully mixed and then emitted through the light-emitting surface 122 of the light guide member 120. The light is subsequently imaged by the convex lens 130. As a result, the emitted light spot is clear. In this way, the overall light effect of the indicator light 100 of the household appliance can be made clear and uniform, thereby improving the aesthetic appearance of the indicator light 100 of the household appliance.

In some embodiments, as shown in FIG. 2, the light-emitting surface 122 is separated from the convex lens 130 and horizontally and directly faces the convex lens 130 in the light emitting direction of the light source 110. As a result, the convex lens 130 can well collect the light emitted from the light-emitting surface 122 of the light guide member 120, and a uniform light spot can be generated on the side of the convex lens 130 away from the light-emitting surface 122 according to the imaging principle of the lens.

It should be noted that the imaging principle of the lens is as follows. When an object distance (a distance between an object and the convex lens) is greater than twice the focal length, and an image distance (a distance between an image and the convex lens) is greater than one focal length and smaller than twice the focal length, a reduced and inverted real image is formed on the other side of the convex lens that is away from the object. When both the object distance and the image distance are equal to twice the focal length, an equal-sized and inverted real image is formed on the other side of the convex lens that is away from the object. When the object distance is greater than one focal length and smaller than twice the focal length, and the image distance is greater than twice the focal length, an enlarged and inverted real image is formed on the other side of the convex lens. When the object distance is smaller than one focal length, an enlarged and erected virtual image is formed on a side of the convex lens where the object is located.

In some embodiments, as shown in FIG. 2, if the light guide member 120 is sectioned longitudinally in a length direction of the light guide member 120, a cross-section of the light guide member 120 is of an isosceles trapezoid shape. When the light from the light source 110 enters the light guide member 120, the light may be reflected in the length direction of the light guide member 120. By gradually increasing a width of the cross-section of the light guide member 120 from the light incident surface 121 to the light-emitting surface 122, a reflection range of the emitted light can be expanded, and a change in the light can be made more uniform. As a result, the overall light effect of the indicator light 100 changes uniformly, thereby improving the aesthetic appearance of the indicator light 100.

It can be understood that in other embodiments, the cross-section area of the light guide member 120 may gradually decrease from the light incident surface to the light-emitting surface or remain constant. The present disclosure does not impose any specific limitation in this regard.

In some embodiments, the light guide member 120 is made of a material selected from one of polymethyl methacrylate (PMMA, commonly known as acrylic or plexiglass), polycarbonate (PC), and ABS. PMMA, PC, and ABS are all transparent plastics, which can not only ensure a normal function of the light guide member 120 but also facilitate processing, thereby reducing production cost of the light guide member 120. Meanwhile, they can also improve wear resistance of the light guide member 120 and thus extend a service life of light guide member 120.

It can be understood that the material of the light guide member 120 may further comprise polyethylene terephthalate (PET), polypropylene (PP), polyvinyl chloride (PVC), thermoplastic polyurethane elastomer rubber (TPU), polystyrene (PS), polysulfone (PSF), transparent nylon, etc. The present disclosure does not impose any specific limitation in this regard.

In some embodiments, the light-emitting surface 122 may be covered with a frosted light-transmitting film, enabling the light-emitting surface 122 to be a frosted surface. The frosted light-transmitting film may be made of a PET material with optical light-diffusing particles coated on two sides. Light passes through a PET diffusion layer, and travels through media with different refractive indices, allowing the light to be refracted, reflected, or scattered. This enables uniform transmission of light in the light guide member 120 through the light-emitting surface 122, achieving an optically diffused light-guiding and light-transmitting effect. In this way, light uniformity implemented by the light guide member 120 can be further improved.

It should be noted that when the frosted light-transmitting film is selected, it is necessary to consider both a light transmittance and a haze level. The higher the light transmittance of the frosted light-transmitting film, the lower its haze. On the other hand, a higher haze leads to a better light homogenization effect; relatively, this will result in lower light transmittance, leading to dimmer light.

In some embodiments, the light source 110 is an RGB tricolor light source composed of an array of different high-density LED designs. The RGB tricolor light source features stable performance, high brightness, and easy mounting. A luminous ratio of the RGB tricolor light source can be controlled by an external circuit. In this case, the light can be irradiated into the light incident surface 121 at different irradiation angles and different color combinations. When the light enters the light incident surface 121, it is reflected multiple times on the inner wall of the light guide member 120, which can achieve full and uniform mixing of the incident lights of different colors, and can then be combined into any color on the light-emitting surface 122. As a result, color diversity of the indicator light 100 is realized.

Meanwhile, each of the lighting regions of the tricolor light source can be controlled independently. A monochromatic mode may be selected to meet needs of various objects of different sizes. A multi-color mode may also be selected for ease of use in scenarios where diverse colors need to be changed. In this way, the versatility of the light source 110 can be improved.

It can be understood that various colors seen by human eyes are caused by different wavelengths of the light. Experiments have found that the human eyes are particularly sensitive to three wavelengths. By properly adjusting intensities of these three wavelengths, humans can perceive "almost" all colors. Colors of these three wavelengths are referred to as a color triad of light (RGB), namely: red, green, and blue.

In some embodiments, as shown in FIG. 2, a distance between the convex lens 130 and the light-emitting surface 122 is L1, and a distance between the convex lens 130 and the panel 210 is L2, where L1 represents an object distance of the convex lens 130, and L2 represents an image distance of the convex lens 130. L1 and L2 may be defined within a certain range. In the case that the indicator light satisfies: $10mm \le L1 \le 80mm$; and $50mm \le L2 \le 500mm$, the light emitted from the light-emitting surface 122 can pass through the convex lens 130 smoothly and form an image on a side of the convex lens 130 away from the light-emitting surface 122, thereby ensuring a light emitting effect of the indicator light 100.

It should be noted that, in order to ensure normal imaging of the convex lens 130, it is also necessary to control a relationship between a focal length f of the convex lens 130 and the object distance and image distance, enabling internal components of the indicator light 100 to be fully functional, thereby ensuring normal operation of the indicator light 100. In the present disclosure, L1 may be set to 50 mm, and L2 may be set to 100 mm. By calculation, it can be seen that if the indicator light satisfies: $f<L1<2f$; and $L2>2f$, an enlarged and inverted real image can be formed on a side of the convex lens 120 away from the light-emitting surface 122. Of course, L1 and L2 may be other values. The present disclosure does not impose any specific limitation in this regard.

A surface of the lens may be a spherical surface, and the cross section thereof is an arc. A radius of curvature is primarily used to describe a degree of curvature variation at a certain point of a curve. For the convex lens 130, the greater the radius of curvature, the longer the focal length and the smaller the magnification. Conversely, the smaller the radius of curvature, the shorter the focal length and the greater the magnification.

The radius of the curvature of the convex lens is D1, and the radius of the curvature D1 of the convex lens 130 can be limited to a certain range. In the case that the radius of the curvature satisfies: $10mm \le D1 \le 50mm$, the focal length of the convex lens 130 can be controlled to ensure a light converging capability of the convex lens 130. In the present disclosure, D1 may be 30 mm. Of course, in other embodiments, D1 may be any other values. The present disclosure does not impose any specific limitation in this regard.

In some embodiments, in the case that cross-sections of the light incident surface 121 and the light-emitting surface 122 of the convex lens 130 are both of a circular shape, the light incident surface 121 has a diameter of D2, and the light-emitting surface 122 has a diameter of D3. D2 and D3 may be limited to a certain range. When the indicator light satisfies: 2mm≤D2≤5mm; and 1mm≤D3-D2≤3mm, a cross-sectional area of the light-emitting surface 122 is greater than a cross-sectional area of the light incident surface 121, thereby achieving the effect that the cross-section of the light guide member 120 gradually increases from the light incident surface 121 to the light-emitting surface 122.

In the present disclosure, D2 may be 4 mm, and D3 may be 8 mm. When the light is reflected in the length direction of the light guide member 120, a range of emitted light can be increased, and the light can be changed more uniformly, enabling the overall light effect of the indicator light 100 to change uniformly, thereby improving the aesthetic appearance of the indicator light 100. Of course, in other embodiments, D2 and D3 may be other values. The present disclosure does not impose any specific limitation in this regard.

D4 is set as a diameter of the convex lens 130. The diameter in this case represents a diameter of a plane circle at a side of the convex lens 130 close to the light-emitting surface 122 of the light guide member 120. D4 may be limited to a certain range. In the case that the indicator light satisfies: 5mm≤D4≤40mm; and 3mm≤D3≤8mm, an overall size of the convex lens 130 can be controlled to enable a longitudinal cross-section of the convex lens 130 to be greater than the light-emitting surface 122, thereby ensuring that the convex lens 130 can better collect the light emitted from the light-emitting surface 122.

In the present disclosure, D3 may be set to 8 mm, and D4 may be set to 40 mm, which can prevent a light spot emitted by the light-emitting surface 122 from being larger than the convex lens 130 to ensure that all the light emitted by the light-emitting surface 122 passes through the convex lens 130 smoothly. In this way, a utilization rate of the light is ensured.

The light guide member 120 has a length of L3, and L3 may be limited within a certain range. In the case that L3 satisfies: 15 mm≤L3≤50 mm, a length range of the light guide member 120 can be controlled to ensure that the light inside the light guide member 120 is evenly mixed.

In the present disclosure, L3 may be set to 30 mm, which not only can ensure that the light inside the light guide member 120 is fully and evenly mixed, ,but also can avoid light loss caused by an excessive length of the light guide member 120. In this way, the utilization rate of the light is ensured. Of course, in other embodiments, L3 may be set to other values. The present disclosure does not impose any specific limitation in this regard.

In some embodiments, when the light source 110 operates normally, as shown in FIG. 2, a distance between the light source 110 and the light incident surface 121 is L4. L4 may be limited to a certain range. In the case that L4 satisfies: 0 mm≤L4≤4 mm, a light incidence effect of the light source 110 can be better.

In the present disclosure, L4 may be set to 2 mm, which can further improve the light incidence effect of the light incident surface 121, reduce loss of the light emitted by the light source 110, and improve the utilization rate of the light. Of course, in other embodiments, L4 may be set to other values. The present disclosure does not impose any specific limitation in this regard.

It can be understood that when the distance between the light source 110 and the light incident surface 121 is zero, the light source 110 can be mounted at an end of the light guide member 120 through gluing. The light source 110 and the light guide member 120 may also be integrally formed. The present disclosure does not impose any specific limitation in this regard.

An embodiment of the present disclosure also provides a household appliance.

The household appliance comprises a panel 210 and any one of the above-mentioned indicator light 100.

The panel 210 can transmit light and has good performance in receiving a signal of the indicator light 100, and therefore different colors of the indicator light 100 can be displayed on the panel 210, which can inform the user of an operating state of the home appliance, thereby facilitating use and improving the user experience.

By configuring the convex lens 130 to face the panel 210, the convex lens 130 can collect the light emitted by the light-emitting surface 122 of the light guide member 120, and the light can be imaged on the panel 210. As a result, an indication pattern can be formed on the panel 210, which not only facilitates use but also improves the aesthetic appearance of the indication panel 210 of the household appliance. The indicator pattern on the panel 210 may be of a circular shape, a teardrop shape, a snowflake shape, or other polygonal shapes, which is not specifically limited in the present disclosure.

It can be understood that a material of the panel 210 may be an opaque metallic plate such as steel, aluminum, iron and so on. The panel 210 may be provided with a light-transmitting portion, which may be arranged in correspondence with the indicator light 100. In this way, the material options for the panel 210 of the household appliance is enriched while normal operation of the panel 210 is ensured, broadening the path for a diversified development of products.

It should be noted that the household appliance in the present disclosure may be a dishwasher, such as a built-in dishwasher, a free-standing dishwasher, or a cabinet dishwasher. Of course, in other embodiments, the household appliance may also be a refrigerator, a microwave oven, and a rice cooker, etc. The present disclosure does not impose any specific limitation in this regard.

For the household appliance according to the embodiments of the present disclosure, by providing the above-mentioned indicator light 100, the different colors of the indicator light 100 can be displayed on the panel 210 of the household appliance, which can inform the user of the operating state of the household appliance, thereby facilitating use and improving the user experience. In addition, the indicator pattern can also be formed on the panel 210, which not only facilitates use but also improves the aesthetic appearance of the indicator panel 210 of the household appliance.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "and/or" throughout the specification and claims indicates at least one of the objects associated with "and/or". The character "/" generally indicates that the associated objects before and after the character are in an "or" relationship.

In the description of the present disclosure, it is to be understood that, terms such as "center", "longitudinal", "lateral", "length", "width", "thickness", "over", "below", "front", "back", "left", "right", "vertical", "horizontal", "in", "out" refer to the directions and location relations which are the directions and location relations illustrated in the drawings, and for describing the present disclosure and for describing in simple, and which are not intended to indicate or imply that the device or the elements are disposed to locate at the specific directions or are structured and performed in the specific directions, which could not to be understood to be a limitation to the present disclosure.

Reference throughout this specification to "an embodiment" "some embodiments" "an example" "a specific example" or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

**Claims**

1. An indicator light of a household appliance, the indicator light comprising:

   a light source;
   a light guide member, the light source facing a light incident surface of the light guide member, and the light guide member being configured to reflect light incident from the light incident surface and emit the light through a light-emitting surface; and
   a convex lens, the light-emitting surface facing the convex lens.

2. The indicator light of the household appliance according to claim 1, wherein the light-emitting surface is parallel to and spaced apart from the convex lens.

3. The indicator light of the household appliance according to claim 1 or 2, wherein a cross-sectional area of the light guide member gradually increases from the light incident surface to the light-emitting surface.

4. The indicator light of the household appliance according to any one of claims 1 to 3, wherein the light guide member is made of a material selected from one of PMMA, PC, and ABS.

5. The indicator light of the household appliance according to any one of claims 1 to 4, wherein the light-emitting surface is a frosted surface.

6. The indicator light of the household appliance according to any one of claims 1 to 5, wherein the light source is a RGB tricolor light source.

7. The indicator light of the household appliance according to any one of claims 1 to 6, the indicator light satisfying:

   $$10 \text{ mm} \leq L1 \leq 80 \text{ mm};$$

   $$50 \text{ mm} \leq L2 \leq 500 \text{ mm};$$

   and

   $$10 \text{ mm} \leq D1 \leq 50 \text{ mm},$$

   where:

   L1 represents a distance between the convex lens and the light-emitting surface;

L2 represents a distance between the convex lens and a panel; and
D1 represents a radius of curvature of the convex lens.

**8.** The indicator light of the household appliance according to any one of claims 1 to 7, the indicator light satisfying:

$$2 \text{ mm} \leq D2 \leq 5 \text{ mm};$$

$$1 \text{ mm} \leq D3-D2 \leq 3 \text{ mm};$$

and

$$15 \text{ mm} \leq L3 \leq 50 \text{ mm},$$

where:

D2 represents a diameter of the light incident surface;
D3 represents a diameter of the light-emitting surface; and
L3 represents a length of the light guide body.

**9.** The indicator light of the household appliance according to any one of claims 1 to 8, the indicator light satisfying: $0 \text{ mm} \leq L4 \leq 4 \text{ mm}$, where L4 represents a distance between the light source and the light incident surface.

**10.** A household appliance, comprising:

a panel; and
an indicator light according to any one of claims 1 to 9,
wherein a convex lens faces a panel.

<u>100</u>

110

121

120

122

130

FIG. 1

L4

L1

L2

110    121    120    122

130

210

FIG. 2

## INTERNATIONAL SEARCH REPORT

| | International application No. |
|---|---|
| | **PCT/CN2024/103111** |

### A. CLASSIFICATION OF SUBJECT MATTER

F21V13/02(2006.01)i; F21V8/00(2006.01)i; F21V5/04(2006.01)i; F21W111/00(2018.01)i; F21W131/30(2006.01)i

According to International Patent Classification (IPC) or to both national classification and IPC

### B. FIELDS SEARCHED

Minimum documentation searched (classification system followed by classification symbols)

IPC: F21V, F21W, G02B, F21S

Documentation searched other than minimum documentation to the extent that such documents are included in the fields searched

Electronic data base consulted during the international search (name of data base and, where practicable, search terms used)

CNTXT, DWPI, ENTXTC, WPABSC, CNKI: 指示灯, 提示灯, 发光二极管, 光源, 显示灯, 导光, 光导, 光管, 聚光镜, 平凸透镜, 球面镜, 凸透镜, indicator lights, cue lights, LED, light sources, display lights, light guide+, light pipe+, condenser mirror +, plano-convex lens+, spherical mirror+, convex lens+

### C. DOCUMENTS CONSIDERED TO BE RELEVANT

| Category* | Citation of document, with indication, where appropriate, of the relevant passages | Relevant to claim No. |
|---|---|---|
| PX | CN 220540946 U (WUHU MIDEA INTELLIGENT KITCHEN APPLIANCE MANUFACTURING CO., LTD.) 27 February 2024 (2024-02-27) claims 1-9, description, paragraphs [0032]-[0077], and figures 1-2 | 1-10 |
| X | CN 116203669 A (OPPLE LIGHTING CO., LTD. et al.) 02 June 2023 (2023-06-02) description, paragraphs [0017]-[0021], and figures 1-3 | 1-10 |
| X | JP 2013164916 A (JAPAN BROADCASTING CORP. et al.) 22 August 2013 (2013-08-22) description, paragraphs [0012]-[0073], and figures 1-10 | 1-10 |
| A | CN 102661575 A (BEIJING XINGGUANG FILM & TV EQUIPMENT TECHNOLOGIES CO., LTD.) 12 September 2012 (2012-09-12) entire document | 1-10 |
| A | CN 111207366 A (PULSE OPTICAL CO., LTD.) 29 May 2020 (2020-05-29) entire document | 1-10 |
| A | JP 2006031941 A (SHARP K. K.) 02 February 2006 (2006-02-02) entire document | 1-10 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 August 2024** | **19 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 220540946 | U | 27 February 2024 | None | | | |
| CN | 116203669 | A | 02 June 2023 | CN | 219435076 | U | 28 July 2023 |
| JP | 2013164916 | A | 22 August 2013 | JP | 5902499 | B2 | 13 April 2016 |
| CN | 102661575 | A | 12 September 2012 | None | | | |
| CN | 111207366 | A | 29 May 2020 | CN | 212226945 | U | 25 December 2020 |
| JP | 2006031941 | A | 02 February 2006 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321745833